# EUROPÄISCHE PATENTSCHRIFT

(11) **EP 3 637 580 B1**
(45) Veröffentlichungstag und Bekanntmachung des Hinweises auf die Patenterteilung: **13.04.2022**
(21) Anmeldenummer: 19201761.4
(22) Anmeldetag: 07.10.2019
(51) Int. Cl.: H02J 7/14, B60R 16/03, H01M 6/36, H02J 7/34, H02J 9/06, H02J 15/00

(54) **ENERGIEVERSORGUNGSSYSTEM FÜR EINE VERBRAUCHSEINHEIT UND VERFAHREN ZUR ENERGIEVERSORGUNG EINER VERBRAUCHSEINHEIT**
POWER SUPPLY SYSTEM FOR A CONSUMER UNIT AND METHOD FOR SUPPLYING POWER TO A CONSUMER UNIT
SYSTÈME D'ALIMENTATION EN ÉNERGIE POUR UNE UNITÉ DE CONSOMMATION ET PROCÉDÉ D'ALIMENTATION EN ÉNERGIE D'UNE UNITÉ DE CONSOMMATION

(30) Priorität: 11.10.2018 DE 102018008072
(43) Veröffentlichungstag der Anmeldung: 15.04.2020
(73) Patentinhaber: Diehl Stiftung & Co. KG, 90478 Nürnberg (DE)
(72) Erfinder: Westphal, Robert, 88239 Wangen (DE)
(74) Vertreter: Diehl Patentabteilung

(56) Entgegenhaltungen:
- CN-A- 107 512 149
- US-A- 3 639 773
- US-A1- 2005 253 458
- US-A1- 2013 152 811
- US-A1- 2013 292 130
- US-A1- 2016 298 589

## Beschreibung

Die vorliegende Erfindung betrifft ein Energieversorgungssystem für eine Verbrauchseinheit mit einem oder mehreren sicherheitsrelevanten elektronischen Verbrauchern sowie ein Verfahren zur Energieversorgung einer Verbrauchseinheit mit wenigstens einem sicherheitsrelevanten elektronischen Verbraucher.

Die Energieversorgung von sicherheitsrelevanten elektronischen Verbrauchern ist in vielen Verbrauchseinheiten wie beispielsweise Kraftfahrzeugen, Aufzügen, Systemen der Medizintechnik, etc. relevant, da der Ausfall der Energieversorgung zu lebensbedrohlichen Situationen führen kann. In herkömmlichen Energieversorgungssystemen eingesetzte Notfallbatterien haben in der Regel nur eine geringe Energiedichte und sind deshalb groß und schwer und müssen regelmäßig geladen werden. Die US 2005/0253458 A1 beschreibt ein Energieversorgungssystem mit einer Hauptenergiequelle und einer Thermalbatterie als Stand-by-Energiequelle.

Es ist die Aufgabe der Erfindung, ein verbessertes Energieversorgungssystem mit Thermalbatterien als Notfallbatterien für Verbrauchseinheiten mit sicherheitsrelevanten elektronischen Verbrauchern zu schaffen.

Diese Aufgabe wird gelöst durch die Lehre der unabhängigen Ansprüche. Besonders vorteilhafte Ausgestaltungen und Weiterbildungen der Erfindung sind Gegenstand der abhängigen Ansprüche.

Das erfindungsgemäße Energieversorgungssystem für eine Verbrauchseinheit mit einem oder mehreren sicherheitsrelevanten elektronischen Verbrauchern weist ein Energieversorgungsnetz, an das wenigstens ein sicherheitsrelevanter elektronischer Verbraucher anschließbar ist oder angeschlossen ist, eine Hauptenergieversorgungsquelle zum Einspeisen elektrischer Energie in das Energieversorgungsnetz im Normalbetrieb des Energieversorgungssystems und eine erste Energie-Erfassungsvorrichtung zum Erfassen der von der Hauptenergieversorgungsquelle in das Energieversorgungsnetz eingespeisten elektrischen Energie auf. Außerdem weist das Energieversorgungssystem wenigstens eine Thermalbatterie zum Einspeisen elektrischer Energie in das Energieversorgungsnetz im Notfallbetrieb des Energieversorgungssystems, wenn die von der Hauptenergieversorgungsquelle in das Energieversorgungsnetz einspeisbare elektrische Energie unzureichend ist, wobei wenigstens ein Kondensator parallel zu dieser wenigstens einen Thermalbatterie geschaltet ist, und eine Steuerung zum Umschalten des Energieversorgungssystems in den Notfallbetrieb und Aktivieren der wenigstens einen Thermalbatterie, wenn die durch die erste Energie-Erfassungsvorrichtung erfasste Energie einen vorbestimmten Grenzwert unterschreitet, auf. Erfindungsgemäß ist in Reihe zu dem wenigstens einen sicherheitsrelevanten elektronischen Verbraucher ein Schalter vorgesehen und ist ferner eine zweite Energie-Erfassungsvorrichtung zum Erfassen der von der wenigstens einen Thermalbatterie in das Energieversorgungsnetz eingespeisten elektrischen Energie vorgesehen. Außerdem ist die Steuerung erfindungsgemäß ferner ausgestaltet, um im Notfallbetrieb des Energieversorgungssystems den Schalter des sicherheitsrelevanten elektronischen Verbrauchers zu öffnen, um den wenigstens einen Kondensator aufzuladen, wenn die durch die zweite Energie-Erfassungsvorrichtung erfasste Energie einen vorbestimmten Grenzwert unterschreitet.

Gemäß der Erfindung wird vorgeschlagen, für die Energieversorgung im Notfallbetrieb, wenn die Hauptenergieversorgung ausfällt oder unzureichend ist, Thermalbatterien einzusetzen. Thermalbatterien zeichnen sich durch Kompaktheit, geringes Gewicht, Wartungsfreiheit, Zuverlässigkeit, hohe Leistungs- und Energiedichte und niedrige Herstellungskosten aus. Sie sind daher für den erfindungsgemäßen Einsatz als Notfallenergieversorgung besonders geeignet. Die wenigstens eine Thermalbatterie dient als unabhängiger Energiespeicher, der für eine bestimmte Zeit die für den Notfall notwendige Energie liefert. Der Einsatz der Thermalbatterien ist zum Beispiel zu unterscheiden von einer Kompensation des Antriebs durch eine Primärbatterie oder einer Starthilfe für eine Primärbatterie zum Beispiel von Elektrofahrzeugen. Durch den wenigstens einen Schalter in Reihe zu dem wenigstens einen sicherheitsrelevanten elektronischen Verbraucher und die zweite Energie-Erfassungsvorrichtung kann, wenn die Thermalbatterie nach einer bestimmten Zeitdauer keine ausreichend hohe Energie mehr für die sicherheitsrelevanten Verbraucher bereitstellen kann, mit der Restenergie zumindest der parallel zur wenigstens einen Thermalbatterie geschaltete Kondensator wieder aufgeladen werden.

Im beispielhaften Anwendungsfall eines Kraftfahrzeugs als Verbrauchseinheit handelt es sich bei der Hauptenergieversorgungsquelle beispielsweise um eine Primärbatterie des Kraftfahrzeugs, handelt es sich bei dem Energieversorgungsnetz beispielsweise um ein Bordnetz des Kraftfahrzeugs, und handelt es sich bei den sicherheitsrelevanten elektronischen Verbrauchern beispielsweise um Lenkungen, Bremsen, elektronische Stabilitätskontrollen (ESP), Airbag-Steuerungen, Notrufsysteme, Warnblinkanlagen, Steer-by-wire-Funktionen, Brake-by-wire-Funktionen und dergleichen. Das Energieversorgungssystem der Erfindung ist aber auch für andere Verbrauchseinheiten in vorteilhafter Weise einsetzbar, wie zum Beispiel Aufzüge, seillose Aufzüge, Seilbahnen, medizintechnische Produkte und Systeme, notfalltechnische Produkte und Systeme, und dergleichen.

In einer Ausgestaltung der Erfindung ist die wenigstens eine Thermalbatterie mit einem Wärmetauscher gekoppelt, der mit einer Wärmequelle der Verbrauchseinheit verbunden ist. Durch diese Maßnahme kann die Thermalbatterie im Normalbetrieb des Energieversorgungssystems vorgewärmt werden, sodass ihre Aktivierungsdauer (Zeit zwischen Zündung und Erreichen einer stabilen Versorgungsspannung) verkürzt werden kann und die Thermalbatterie schneller die benötigte Energie bereitstellen kann. Je nach Anwendungsfall der Erfindung können die Thermalbatterien zum Beispiel durch die Restwärme eines Motors, einer elektrischen Heizung, eines Kühlwasserkreislaufs, eines Ölkreislaufs oder eines Abgasstrangs des Kraftfahrzeugs vorgewärmt werden. Vorzugsweise werden die Thermalbatterien auf bis zu etwa 300°C vorgewärmt.

In einer Ausgestaltung der Erfindung weist die wenigstens eine Thermalbatterie mehrere, vorzugsweise verteilt angeordnete Zünder auf, die von der Steuerung zum Aktivieren der Thermalbatterie betätigt werden. Auch durch diese Maßnahme kann die Aktivierungsdauer der Thermalbatterie verkürzt werden, sodass die Thermalbatterie schneller die benötigte Energie bereitstellen kann.

Im Übrigen ist die Thermalbatterie selbst nicht Gegenstand der vorliegenden Erfindung. Das Energieversorgungssystem der Erfindung ist vielmehr auf keinen speziellen Aufbau und keine spezielle Funktionsweise der Thermalbatterie beschränkt.

Vorzugsweise sind in dem Energieversorgungssystem mehrere Thermalbatterien vorgesehen. In diesem Fall ist die Steuerung vorzugsweise ausgestaltet, um die mehreren Thermalbatterien im Notfallbetrieb des Energieversorgungssystems sequenziell zu aktivieren. Die Zeitdauer der möglichen Energieversorgung der sicherheitsrelevanten elektronischen Verbraucher im Notfallbetrieb des Energieversorgungssystems kann so verlängert werden.

Bei dieser Ausführungsform der Erfindung ist die Steuerung vorzugsweise ferner ausgestaltet, das Energieversorgungssystem wieder in den Normalbetrieb umzuschalten und keine weiteren Thermalbatterien mehr zu aktivieren, wenn die durch die erste Energie-Erfassungsvorrichtung erfasste Energie wieder einen vorbestimmten Grenzwert überschreitet. Mit anderen Worten können die noch nicht aktivierten Thermalbatterien für künftige Notfallsituationen vorgehalten werden, falls die Energieversorgung der Verbrauchseinheit nach einer kurzzeitigen Unterbrechung wieder durch die Hauptenergieversorgungsquelle bereitgestellt werden kann.

Gemäß der Erfindung enthält das Energieversorgungssystem wenigstens einen Kondensator, der parallel zu der wenigstens einen Thermalbatterie geschaltet ist und im Normalbetrieb des Energieversorgungssystems durch die Hauptenergieversorgungsquelle aufladbar ist. Mit diesem wenigstens einen Kondensator kann die Aktivierungsdauer der Thermalbatterie überbrückt werden, um die sicherheitsrelevanten Verbraucher sofort mit elektrischer Energie aus dem aufgeladenen Kondensator zu versorgen. Vorzugsweise sind mehrere Kondensatoren und/oder eine Kondensatorbank vorgesehen.

In einer weiteren Ausgestaltung der Erfindung weist das Energieversorgungssystem ferner eine Betriebsparameter-Erfassungsvorrichtung zum Erfassen wenigstens eines Betriebsparameters der Verbrauchseinheit auf. In diesem Fall ist die Steuerung vorzugsweise ausgestaltet, um das Energieversorgungssystems nur dann in den Notfallbetrieb umzuschalten und die wenigstens eine Thermalbatterie nur dann zu aktivieren, wenn der durch die Betriebsparameter-Erfassungsvorrichtung erfasste Betriebsparameter einen vorbestimmten Grenzwert überschreitet bzw. unterschreitet. Durch diese Maßnahme kann verhindert werden, dass bestimmte Betriebszustände der Verbrauchseinheit (z.B. Stillstand des Kraftfahrzeugs, Anlassen eines Verbrennungsmotors, etc.) unnötigerweise einen Notfallbetrieb des Energieversorgungssystems auslösen. Bei den hierzu überwachten Betriebsparametern der Verbrauchseinheit handelt es sich dementsprechend beispielsweise um eine Geschwindigkeit eines Kraftfahrzeugs, etc.

In einer weiteren Ausgestaltung der Erfindung ist die wenigstens eine Thermalbatterie austauschbar in oder an der Verbrauchseinheit montiert. Beispielsweise können die Thermalbatterien mittels Bajonett- oder Schraubverschluss zum Beispiel unter einem verschließbaren Deckel montiert sein. Im Anwendungsfall eines Kraftfahrzeugs können die Thermalbatterien so auf einfache Weise in einer Werkstatt oder Tankstelle ähnlich zum Beispiel einem Ölfilter ausgewechselt werden.

In einer weiteren Ausgestaltung der Erfindung ist an das Energieversorgungsnetz auch wenigstens ein nicht-sicherheitsrelevanter elektronischer Verbraucher anschließbar bzw. angeschlossen. Bei dieser Ausführungsform ist vorzugsweise ein Schalter in Reihe zu diesem nicht-sicherheitsrelevanten elektronischen Verbraucher vorgesehen und ist die Steuerung vorzugsweise ausgestaltet, um im Notfallbetrieb des Energieversorgungssystems den Schalter des nicht-sicherheitsrelevanten elektronischen Verbrauchers zu öffnen und so vom Energieversorgungsnetz zu trennen, sodass im Notfallbetrieb des Energieversorgungssystems nur die sicherheitsrelevanten elektronischen Verbraucher von der wenigstens einen Thermalbatterie mit elektrischer Energie versorgt werden.

In einer noch weiteren Ausgestaltung der Erfindung weist das Energieversorgungssystem ferner eine Anzeigevorrichtung auf, die mit der Steuerung verbunden ist, um einem Benutzer der Verbrauchseinheit den Betriebszustand des Energieversorgungssystems anzuzeigen. Mit der Anzeigevorrichtung können einem Benutzer insbesondere der aktuelle Betriebsmodus (Normalbetrieb oder Notfallbetrieb), aber auch eine niedrige Energieleistung der Hauptenergieversorgungsquelle, eine verbleibende Energieversorgungszeit durch die Thermalbatterien, ein erforderlicher Austausch von Thermalbatterien und dergleichen angezeigt werden.

Bei dem erfindungsgemäßen Verfahren zur Energieversorgung einer Verbrauchseinheit mit wenigstens einem sicherheitsrelevanten elektronischen Verbraucher, der an ein Energieversorgungsnetz angeschlossen ist, wird im Normalbetrieb des Energieversorgungssystems elektrische Energie von einer Hauptenergieversorgungsquelle in das Energieversorgungsnetz eingespeist, wird die von der Hauptenergieversorgungsquelle in das Energieversorgungsnetz eingespeiste elektrische Energie überwacht, wird in einen Notfallbetrieb des Energieversorgungssystems umgeschaltet, wenn die von der Hauptenergieversorgungsquelle in das Energieversorgungsnetz eingespeiste Energie einen vorbestimmten Grenzwert unterschreitet, und wird im Notfallbetrieb des Energieversorgungssystems wenigstens eine Thermalbatterie aktiviert, um elektrische Energie in das Energieversorgungsnetz einzuspeisen. Erfindungsgemäß wird ferner im Notfallbetrieb des Energieversorgungssystems eine von der wenigstens einen Thermalbatterie in das Energieversorgungsnetz eingespeiste Energie überwacht und wird im Notfallbetrieb des Energieversorgungssystems durch die wenigstens eine Thermalbatterie wenigstens ein Kondensator, der parallel zu der wenigstens einen Thermalbatterie geschaltet ist, aufgeladen, wenn die von der wenigstens einen Thermalbatterie in das Energieversorgungsnetz eingespeiste Energie einen vorbestimmten Grenzwert unterschreitet, indem ein in Reihe zu dem wenigstens einen sicherheitsrelevanten elektronischen Verbraucher vorgesehener Schalter geöffnet wird.

Mit diesem Energieversorgungsverfahren können die gleichen Vorteile wie mit dem oben erläuterten Energieversorgungssystem der Erfindung erzielt werden. Bezüglich der Vorteile, bevorzugten Ausführungsformen und Begrifflichkeiten wird ergänzend auf die obigen Erläuterungen zum Energieversorgungssystem verwiesen.

In einer Ausgestaltung der Erfindung wird die wenigstens eine Thermalbatterie im Normalbetrieb des Energieversorgungssystems von einer Wärmequelle der Verbrauchseinheit vorgewärmt. Alternativ oder zusätzlich wird die wenigstens eine Thermalbatterie durch mehrere, vorzugsweise verteilt angeordnete Zünder aktiviert.

In einer Ausgestaltung der Erfindung sind mehrere Thermalbatterien vorgesehen. In diesem Fall werden diese mehreren Thermalbatterien im Notfallbetrieb des Energieversorgungssystems vorzugsweise sequenziell aktiviert. Bei dieser Ausführungsform wird das Energieversorgungssystem bevorzugt wieder in den Normalbetrieb umgeschaltet und werden bevorzugt keine weiteren Thermalbatterien mehr aktiviert, wenn die von der Hauptenergieversorgungsquelle in das Energieversorgungsnetz einspeisbare Energie wieder einen vorbestimmten Grenzwert überschreitet.

In einer Ausgestaltung der Erfindung wird in einer Aktivierungszeitspanne der Thermalbatterie elektrische Energie von wenigstens einem Kondensator, der parallel zu der wenigstens einen Thermalbatterie geschaltet ist und im Normalbetrieb des Energieversorgungssystems durch die Hauptenergieversorgungsquelle aufgeladen wird, in das Energieversorgungsnetz eingespeist.

In einer weiteren Ausgestaltung der Erfindung wird ferner wenigstens ein Betriebsparameter der Verbrauchseinheit überwacht. In diesem Fall wird das Energieversorgungssystem vorzugsweise nur dann in den Notfallbetrieb umgeschaltet und wird die wenigstens eine Thermalbatterie vorzugsweise nur dann aktiviert, wenn der Betriebsparameter einen vorbestimmten Grenzwert überschreitet oder unterschreitet.

In einer weiteren Ausgestaltung der Erfindung ist an das Energieversorgungsnetz ferner wenigstens ein nicht-sicherheitsrelevanter elektronischer Verbraucher angeschlossen. Bei dieser Ausführungsform wird dieser wenigstens eine nicht-sicherheitsrelevante elektronische Verbraucher bevorzugt im Notfallbetrieb des Energieversorgungssystems vom Energieversorgungsnetz getrennt.

In einer noch weiteren Ausgestaltung der Erfindung kann einem Benutzer der Verbrauchseinheit der Betriebszustand des Energieversorgungssystems angezeigt werden.

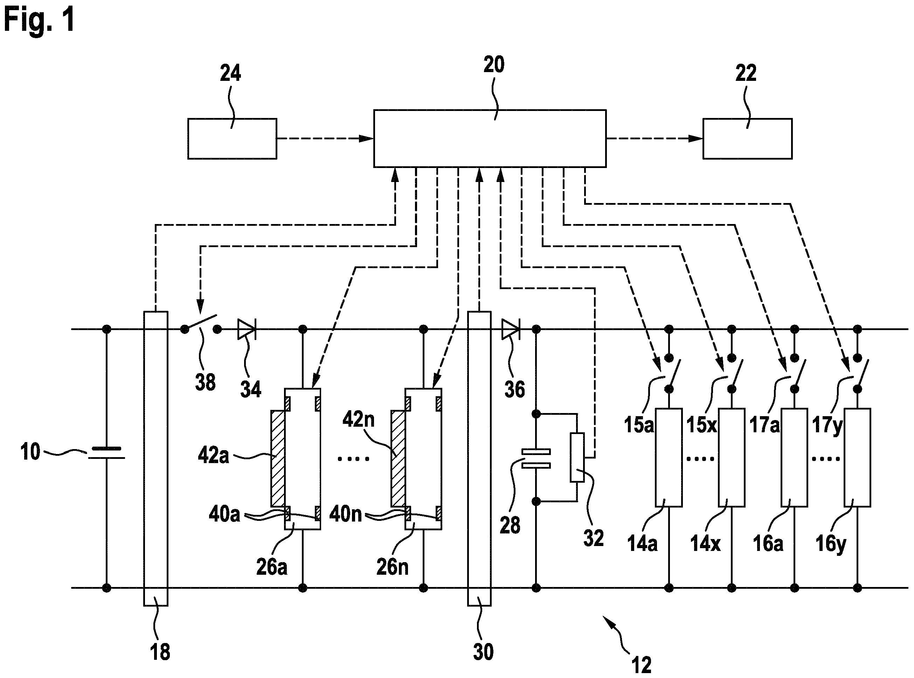

Obige sowie weitere Merkmale und Vorteile der Erfindung werden aus der nachfolgenden Beschreibung eines bevorzugten, nicht-einschränkenden Ausführungsbeispiels anhand der beiliegenden Zeichnung besser verständlich. Darin zeigt die einzige Figur 1 größtenteils schematisch eine Schaltplanskizze eines Energieversorgungssystems gemäß einem Ausführungsbeispiel der vorliegenden Erfindung.

Bezugnehmend auf Fig. 1 wird nachfolgend ein Ausführungsbeispiel eines Energieversorgungssystems gemäß der vorliegenden Erfindung am Beispiel eines Kraftfahrzeugs als Verbrauchseinheit in mehr Einzelheiten beschrieben.

Im Bereich von Kraftfahrzeugen definiert die Norm ISO 26262 verschiedene Sicherheitsanforderungsstufen (Automotive Safety Integrity Level, ASIL) für sicherheitsrelevante Systeme. Bei Kraftfahrzeugen bis ASIL 3 trägt der Fahrer noch die volle Verantwortung und führt die Fahrzeuglenkung durch; im Notfall wird eine Energieversorgung für 10 bis 30 Sekunden benötigt, um das Kraftfahrzeug sicher am Straßenrand zum Stillstand zu bringen. Bei Kraftfahrzeugen gemäß ASIL 4 (automatisierte Fahrzeugführung) oder ASIL 5 (vollständig autonomes Fahren) wird im Notfall eine Energieversorgung für etwa 5 Minuten benötigt, um die Aufmerksamkeit des Fahrers zu erlangen und das Kraftfahrzeug sicher zum Stillstand zu bringen. Zur Realisierung einer Komfortfunktion wird im Notfall eine Energieversorgung für 15 bis 30 Minuten benötigt, um mit dem Kraftfahrzeug eine Werkstatt oder einen sicheren Platz anzufahren. Das Energieversorgungssystem der Erfindung ist auch geeignet, moderne Kraftfahrzeugen mit hohen Sicherheitsanforderungsstufen realisieren zu können.

Das Energieversorgungssystem von Fig. 1 enthält eine Hauptenergieversorgungsquelle 10, beispielsweise die Primärbatterie des Kraftfahrzeugs, welche im Normalbetrieb elektrische Energie in ein Energieversorgungsnetz 12, beispielsweise das Bordnetz des Kraftfahrzeugs, einspeist. An das Energieversorgungsnetz 12 sind mehrere sicherheitsrelevante elektronische Verbraucher 14a..x, beispielsweise Lenkungen, Bremsen, elektronische Stabilitätskontrollen (ESP), Airbag-Steuerungen, Notrufsysteme, Warnblinkanlagen, Steer-by-wire-Funktionen, Brake-by-wire-Funktionen und dergleichen, sowie mehrere nicht-sicherheitsrelevante elektronische Verbraucher 16a..y, beispielsweise Klimaanlagen, Unterhaltungsmedien und dergleichen, angeschlossen. Die sicherheitsrelevanten Verbraucher 14..x sind optional jeweils über einen Schalter 15a..x mit dem Energieversorgungsnetz 12 verbunden, sodass sie bei Bedarf von diesem getrennt werden können. Die nicht-sicherheitsrelevanten Verbraucher 16..y sind jeweils über einen Schalter 17a..y mit dem Energieversorgungsnetz 12 verbunden, sodass sie bei Bedarf und insbesondere im Notfallbetrieb des Energieversorgungssystems vom Energieversorgungsnetz 12 getrennt werden können.

Die von der Hauptenergieversorgungsquelle 10 in das Energieversorgungsnetz 12 eingespeiste Energie wird mittels einer ersten Energie-Erfassungsvorrichtung 18 überwacht. Die erste Energie-Erfassungsvorrichtung 18 ist mit einer Steuerung 20 zum Ansteuern des Energieversorgungssystems und der Schalter 15a..x, 17a..y der Verbraucher 14a..x, 16a..y verbunden. Die Steuerung 20 ist zudem mit einer Anzeigevorrichtung 22 verbunden, um einem Benutzer des Kraftfahrzeugs Informationen über den Betriebszustand des Energieversorgungssystems (optisch und/oder akustisch) anzeigen zu können. Die Steuerung 20 ist bevorzugt außerdem mit einer Betriebsparameter-Erfassungsvorrichtung 24 verbunden, um Betriebsparameter des Kraftfahrzeugs wie beispielsweise die Fahrzeuggeschwindigkeit zu erfassen. Die Steuerung 20 kann zum Beispiel eine ohnehin im Kraftfahrzeug vorhandene ECU (Electronic Control Unit) oder eine eigene Elektronik des Energieversorgungssystems sein.

Wie in Fig. 1 dargestellt, enthält das Energieversorgungssystem ferner mehrere Thermalbatterien 26a..n zum Einspeisen elektrischer Energie in das Energieversorgungsnetz 12 im Notfallbetrieb des Energieversorgungssystems. Thermalbatterien zeichnen sich durch Kompaktheit, geringes Gewicht, Wartungsfreiheit, hohe Zuverlässigkeit, hohe Leistungs- und Energiedichte und niedrige Herstellungskosten aus. Die Thermalbatterien 26a..n sind austauschbar im oder am Kraftfahrzeug, zum Beispiel im Motorraum des Kraftfahrzeugs, montiert, beispielsweise mittels Bajonett- oder Schraubverschlüssen unter einem verschließbaren Deckel. So können die Thermalbatterien 26a..n im Bedarfsfall auf einfache Weise ähnlich wie zum Beispiel ein Ölfilter in einer Werkstatt oder Tankstelle ausgewechselt werden.

Aufbau und Funktionsweise von Thermalbatterien sind dem Fachmann grundsätzlich bekannt, weshalb in diesem Zusammenhang auf eine detailliertere Beschreibung verzichtet wird. Für das Energieversorgungssystem der Erfindung können grundsätzlich beliebige Thermalbatterien eingesetzt werden.

Außerdem enthält das Energieversorgungssystem wenigstens einen Kondensator 28, der parallel zu den Thermalbatterien 26a..n geschaltet ist. Dieser wenigstens eine Kondensator 28 wird im Normalbetrieb des Energieversorgungssystems durch die Hauptenergieversorgungsquelle 10 aufgeladen und kann im Notfallbetrieb des Energieversorgungssystems elektrische Energie in das Energieversorgungsnetz 12 einspeisen, um eine Aktivierungsdauer der Thermalbatterien 26a..n (Zeit zwischen Zündung und Erreichen einer stabilen Versorgungsspannung) von beispielsweise etwa 50 ms bis 500 ms zu überbrücken. Spannungseinbrüche unter 50 ms können beispielsweise mit einem Aluminium-Elektrolyt-Kondensator überbrückt werden, der sich durch eine schnelle und hohe Leistungsabgabe und einen weiten Betriebstemperaturbereich auszeichnet. Für Überbrückungen im Sekundenbereich können bevorzugt Doppelschichtkondensatoren (Supercaps bzw. Ultracaps) eingesetzt werden, für mehrere Sekunden bevorzugt Kondensatorbänke. Für den wenigstens einen Kondensator 28 dieses Energieversorgungssystems kann wahlweise auch eine eventuell bereits vorhandene Rekuperationskondensatorbank verwendet werden.

Außerdem enthält das Energieversorgungssystem eine zweite Energie-Erfassungsvorrichtung 30 zum Überwachen der von den Thermalbatterien 26a..n in das Energieversorgungsnetz 12 eingespeisten elektrischen Energie. Vorzugsweise enthält das Energieversorgungssystem auch eine Spannungserfassungsvorrichtung 32 zum Überwachen des Ladezustandes des Kondensators 28.

Wie in Fig. 1 dargestellt, sind im Energieversorgungsnetz 12 zwischen der Hauptenergieversorgungsquelle 10 und den Thermalbatterien 26a..n eine Diode 34 und zwischen den Thermalbatterien 26a..n und den elektronischen Verbrauchern 14a..x, 16a..y eine Diode 36 vorgesehen. Außerdem ist im Energieversorgungsnetz 12 zwischen der Hauptenergie-versorgungsquelle 10 und den Thermalbatterien 26a..n optional ein Schaltelement 38 vorgesehen, um die Hauptenergieversorgungsquelle 10 im Notfallbetrieb des Energieversorgungssystems vom Energieversorgungsnetz 12 trennen zu können.

Wie in Fig. 1 angedeutet, haben die Thermalbatterien 26a..n vorzugsweise jeweils mehrere verteilt angeordnete Zünder 40a..n, die von der Steuerung 20 zum Aktivieren der Thermalbatterien 26a..n angesteuert werden können. Durch diese mehreren Zünder 40a..n kann die Aktivierungsdauer der Thermalbatterien 26a..n verkürzt werden, sodass die Thermalbatterien 26a..n die benötigte Energie im Notfallbetrieb schneller bereitstellen können. Alternativ oder zusätzlich sind die Thermalbatterien 26a..n zudem mit Wärmetauschern 42a..n gekoppelt, die mit einer Wärmequelle der Verbrauchseinheit, beispielsweise einem Motor, einer elektrischen Heizung, einem Kühlwasserkreislauf, einem ÖIkreislauf oder einem Abgasstrang des Kraftfahrzeugs, verbunden sind, sodass die Thermalbatterien 26a..n im Normalbetrieb des Energieversorgungssystems vorgewärmt werden können, um dann beim Umschalten in den Notfallbetrieb ihre Aktivierungsdauer zu verkürzen. Die Thermalbatterien 26a..n können beispielsweise auf bis zu etwa 300°C vorgewärmt werden.

Die Funktionsweise dieses Energieversorgungssystems ist beispielsweise wie folgt.

Bei einem Ausfall oder einer unzureichenden Leistung der Hauptenergieversorgungsquelle 10, was durch die erste Energie-Erfassungsvorrichtung 18 erkannt wird, für zum Beispiel mehr als 500 ms schaltet die Steuerung 20 das Energieversorgungssystem in den Notfallbetrieb um. In diesem Zusammenhang sollen bestimmte Betriebszustände des Fahrzeugs wie zum Beispiel ein Fahrzeugstillstand oder ein Anlassen des Verbrennungsmotors allerdings nicht den Notfallbetrieb auslösen, was durch die Überwachung entsprechender Betriebsparameter mit der Betriebsparameter-Erfassungsvorrichtung 24 erreicht werden kann.

Beim Umschalten in den Notfallbetrieb des Energieversorgungssystems trennt die Steuerung die Hauptenergieversorgungsquelle 10 und die nicht-sicherheitsrelevanten Verbraucher 16a..y durch Öffnen der entsprechenden Schalter 38 bzw. 17a..y vom Energieversorgungsnetz 12 und aktiviert die erste Thermalbatterie 26a durch Ansteuern ihrer Zünder 40a. Während der Aktivierungsdauer der ersten Thermalbatterie 26a wird elektrische Energie von dem wenigstens einen Kondensator 28 in das Energieversorgungsnetz 12 eingespeist, anschließend dann von der ersten Thermalbatterie 26a. Durch die Überwachung des Ladezustandes des wenigstens einen Kondensators 28 mittels der Spannungserfassungsvorrichtung 32 kann der Zeitpunkt der Aktivierung der ersten Thermalbatterie 26a optimiert werden.

Die mehreren Thermalbatterien 26a..n werden von der Steuerung 20 im Notfallbetrieb des Energieversorgungssystems sequenziell aktiviert. Rechtzeitig vor dem Leistungsende der aktiven Thermalbatterie wird von der Steuerung 20 die nächste Thermalbatterie aktiviert, um eine möglichst lückenlose Energieeinspeisung in das Energieversorgungsnetz 12 gewährleisten zu können. Wenn die Hauptenergieversorgungsquelle 10 zwischenzeitlich wieder ausreichend Energie bereitstellen kann, was von der ersten Energie-Erfassungsvorrichtung 18 erkannt wird, so werden die weiteren Thermalbatterien aber nicht mehr aktiviert, sondern es wird wieder in den Normalbetrieb des Energieversorgungssystems zurückgeschaltet.

Wenn eine aktivierte Thermalbatterie 26a..n nach einer bestimmten Zeitdauer von beispielsweise etwa 300 Sekunden keine ausreichend hohe Leistung mehr abgeben kann, was durch die zweite Energie-Erfassungseinrichtung 30 erkannt wird, so kann mit der Restenergie dieser Thermalbatterie noch der wenigstens eine Kondensator 28 wieder aufgeladen werden. In dieser Phase werden auch die sicherheitsrelevanten Verbraucher 14a..x über die Schalter 15a..x kurzzeitig vom Energieversorgungsnetz 12 getrennt.

### BEZUGSZIFFERNLISTE

- 10: Hauptenergieversorgungsquelle
- 12: Energieversorgungsnetz
- 14a..x: sicherheitsrelevante elektronische Verbraucher
- 15a..x: Schalter
- 16a..y: nicht-sicherheitsrelevante elektronische Verbraucher
- 17a..y: Schalter
- 18: erste Energie-Erfassungsvorrichtung
- 20: Steuerung
- 22: Anzeigevorrichtung
- 24: Betriebsparameter-Erfassungsvorrichtung
- 26a..n: Thermalbatterie
- 28: Kondensator oder Kondensatorbank
- 30: zweite Energie-Erfassungsvorrichtung
- 32: Spannungserfassungsvorrichtung
- 34: Diode
- 36: Diode
- 38: Schaltelement
- 40a..n: Zünder
- 42a..n: Wärmetauscher

## Patentansprüche

1. Energieversorgungssystem für eine Verbrauchseinheit mit einem oder mehreren sicherheitsrelevanten elektronischen Verbrauchern (14a..x), aufweisend:
ein Energieversorgungsnetz (12), an das wenigstens ein sicherheitsrelevanter elektronischer Verbraucher (14a..x) anschließbar ist oder angeschlossen ist;
eine Hauptenergieversorgungsquelle (10) zum Einspeisen elektrischer Energie in das Energieversorgungsnetz (12) im Normalbetrieb des Energieversorgungssystems;
eine erste Energie-Erfassungsvorrichtung (18) zum Erfassen der von der Hauptenergieversorgungsquelle (10) in das Energieversorgungsnetz (12) eingespeisten elektrischen Energie;
wenigstens eine Thermalbatterie (26a..n) zum Einspeisen elektrischer Energie in das Energieversorgungsnetz (12) im Notfallbetrieb des Energieversorgungssystems, wenn die von der Hauptenergieversorgungsquelle (10) in das Energieversorgungsnetz (12) einspeisbare elektrische Energie unzureichend ist, wobei wenigstens ein Kondensator (28) parallel zu der wenigstens einen Thermalbatterie (26a..n) geschaltet ist;
eine Steuerung (20) zum Umschalten des Energieversorgungssystems in den Notfallbetrieb und Aktivieren der wenigstens einen Thermalbatterie (26a..n), wenn die durch die erste Energie-Erfassungsvorrichtung (18) erfasste Energie einen vorbestimmten Grenzwert unterschreitet; und einen Schalter (15a..x) in Reihe zu dem wenigstens einen sicherheitsrelevanten elektronischen Verbraucher (14a..x)
**dadurch gekennzeichnet, dass**
ferner eine zweite Energie-Erfassungsvorrichtung (30) zum Erfassen der von der wenigstens einen Thermalbatterie (26a..n) in das Energieversorgungsnetz (12) eingespeisten elektrischen Energie vorgesehen ist; und
die Steuerung ferner ausgestaltet ist, um im Notfallbetrieb des Energieversorgungssystems den Schalter (15a..x) des sicherheitsrelevanten elektronischen Verbrauchers (14a..x) zu öffnen, um den wenigstens einen Kondensator (28) aufzuladen, wenn die durch die zweite Energie-Erfassungsvorrichtung (30) erfasste Energie einen vorbestimmten Grenzwert unterschreitet.

2. Energieversorgungssystem nach Anspruch 1, bei welchem die wenigstens eine Thermalbatterie (26a..n) mit einem Wärmetauscher (42a..n) gekoppelt ist, der mit einer Wärmequelle der Verbrauchseinheit verbunden ist.

3. Energieversorgungssystem nach Anspruch 1 oder 2, bei welchem die wenigstens eine Thermalbatterie (26a..n) mehrere Zünder (40a..n) aufweist, die von der Steuerung (20) zum Aktivieren der Thermalbatterie (26a..n) betätigt werden.

4. Energieversorgungssystem nach einem der vorhergehenden Ansprüche, bei welchem mehrere Thermalbatterien (26a..n) vorgesehen sind und die Steuerung (20) ausgestaltet ist, um die mehreren Thermalbatterien (26a..n) im Notfallbetrieb des Energieversorgungssystems sequenziell zu aktivieren.

5. Energieversorgungssystem nach einem der vorhergehenden Ansprüche, bei welchem
das Energieversorgungssystem ferner eine Betriebsparameter-Erfassungsvorrichtung (24) zum Erfassen wenigstens eines Betriebsparameters der Verbrauchseinheit aufweist, und
die Steuerung (20) ausgestaltet ist, um das Energieversorgungssystems nur dann in den Notfallbetrieb umzuschalten und die wenigstens eine Thermalbatterie (26a..n) nur dann zu aktivieren, wenn der durch die Betriebsparameter-Erfassungsvorrichtung (24) erfasste Betriebsparameter einen vorbestimmten Grenzwert überschreitet oder unterschreitet.

6. Energieversorgungssystem nach einem der vorhergehenden Ansprüche, bei welchem die wenigstens eine Thermalbatterie (26a..n) austauschbar in oder an der Verbrauchseinheit montiert ist.

7. Energieversorgungssystem nach einem der vorhergehenden Ansprüche, bei welchem
an das Energieversorgungsnetz (12) ferner wenigstens ein nicht-sicherheitsrelevanter elektronischer Verbraucher (16a..y) anschließbar ist oder angeschlossen ist, wobei ein Schalter (17a..y) in Reihe zu dem nicht-sicherheitsrelevanten elektronischen Verbraucher (16a..y) vorgesehen ist, und
die Steuerung ausgestaltet ist, um im Notfallbetrieb des Energieversorgungssystems den Schalter (17a..y) des nicht-sicherheitsrelevanten elektronischen Verbrauchers (16a..y) zu öffnen.

8. Verfahren zur Energieversorgung einer Verbrauchseinheit mit wenigstens einem sicherheitsrelevanten elektronischen Verbraucher (14a..x), der an ein Energieversorgungsnetz (12) angeschlossen ist, bei welchem
im Normalbetrieb des Energieversorgungssystems elektrische Energie von einer Hauptenergieversorgungsquelle (10) in das Energieversorgungsnetz (12) eingespeist wird;
die von der Hauptenergieversorgungsquelle (10) in das Energieversorgungsnetz (12) eingespeiste elektrische Energie überwacht wird;
in einen Notfallbetrieb des Energieversorgungssystems umgeschaltet wird, wenn die von der Hauptenergieversorgungsquelle (10) in das Energieversorgungsnetz (12) eingespeiste Energie einen vorbestimmten Grenzwert unterschreitet; und im Notfallbetrieb des Energieversorgungssystems wenigstens eine Thermalbatterie (26a..n) aktiviert wird, um elektrische Energie in das Energieversorgungsnetz (12) einzuspeisen,
**dadurch gekennzeichnet, dass**
im Notfallbetrieb des Energieversorgungssystems eine von der wenigstens einen Thermalbatterie (26a..n) in das Energieversorgungsnetz (12) eingespeiste Energie überwacht wird; und
im Notfallbetrieb des Energieversorgungssystems durch die wenigstens eine Thermalbatterie (26a..n) wenigstens ein Kondensator (28), der parallel zu der wenigstens einen Thermalbatterie (26a..n) geschaltet ist, aufgeladen wird, wenn die von der wenigstens einen Thermalbatterie (26a..n) in das Energieversorgungsnetz (12) eingespeiste Energie einen vorbestimmten Grenzwert unterschreitet, indem ein in Reihe zu dem wenigstens einen sicherheitsrelevanten elektronischen Verbraucher (14a..x) vorgesehener Schalter (15a..x) geöffnet wird.

9. Verfahren nach Anspruch 8, bei welchem die wenigstens eine Thermalbatterie (26a..n) im Normalbetrieb des Energieversorgungssystems von einer Wärmequelle der Verbrauchseinheit vorgewärmt wird.

10. Verfahren nach Anspruch 8 oder 9, bei welchem die wenigstens eine Thermalbatterie (26a..n) durch mehrere Zünder (40a..n) aktiviert wird.

11. Verfahren nach einem der Ansprüche 8 bis 10, bei welchem mehrere Thermalbatterien (26a..n) vorgesehen sind und die mehreren Thermalbatterien (26a..n) im Notfallbetrieb des Energieversorgungssystems sequenziell aktiviert werden.

12. Verfahren nach einem der Ansprüche 8 bis 11, bei welchem in einer Aktivierungszeitspanne der Thermalbatterie (26a..n) elektrische Energie von wenigstens einem Kondensator (28), der parallel zu der wenigstens einen Thermalbatterie (26a..n) geschaltet ist und im Normalbetrieb des Energieversorgungssystems durch die Hauptenergieversorgungsquelle (10) aufgeladen wird, in das Energieversorgungsnetz (12) eingespeist wird.

13. Verfahren nach einem der Ansprüche 8 bis 12, bei welchem ferner wenigstens ein Betriebsparameter der Verbrauchseinheit überwacht wird und das Energieversorgungssystem nur dann in den Notfallbetrieb umgeschaltet und die wenigstens eine Thermalbatterie (26a..n) nur dann aktiviert wird, wenn der Betriebsparameter einen vorbestimmten Grenzwert überschreitet oder unterschreitet.

14. Verfahren nach einem der Ansprüche 8 bis 13, bei welchem an das Energieversorgungsnetz (12) ferner wenigstens ein nicht-sicherheitsrelevanter elektronischer Verbraucher (16a..y) angeschlossen ist und dieser wenigstens eine nicht-sicherheitsrelevante elektronische Verbraucher (16a..y) im Notfallbetrieb des Energieversorgungssystems vom Energieversorgungsnetz (12) getrennt wird.

## Claims

1. Energy supply system for a consumer unit with one or more safety-relevant electronic consumers (14a..x), having:
an energy supply network (12) to which at least one safety-relevant electronic consumer (14a..x) can be connected or is connected;
a main energy supply source (10) for feeding electrical energy into the energy supply network (12) in the normal operating mode of the energy supply system;
a first energy detection device (18) for detecting the electrical energy which is fed into the energy supply network (12) by the main energy supply source (10);
at least one thermal battery (26a..n) for feeding electrical energy into the energy supply network (12) in the emergency operating mode of the energy supply system if the electrical energy which can be fed into the energy supply network (12) by the main energy supply source (10) is insufficient, wherein at least one capacitor (28) is connected in parallel with the at least one thermal battery (26a..n);
a controller (20) for switching the energy supply system into the emergency operating mode and activating the at least one thermal battery (26a..n) if the energy which is detected by the first energy detection device (18) undershoots a predetermined limiting value; and
a switch (15a..x) in series with the at least one safety-relevant electronic consumer (14a..x),
**characterized in that**
also a second energy detection device (30) is provided for detecting the electrical energy which is fed into the energy supply network (12) by the at least one thermal battery (26a..n); and
the controller is also configured to open the switch (15a..x) of the safety-relevant electronic consumer (14a..x) in the emergency operating mode of the energy supply system in order to charge the at least one capacitor (28) if the energy which is detected by the second energy detection device (30) undershoots a predetermined limiting value.

2. Energy supply system according to Claim 1, in which the at least one thermal battery (26a..n) is coupled to a heat exchanger (42a..n) which is connected to a heat source of the consumer unit.

3. Energy supply system according to Claim 1 or 2, in which the at least one thermal battery (26a..n) has a plurality of igniters (40a..n) which are activated by the controller (20) in order to activate the thermal battery (26a..n).

4. Energy supply system according to one of the preceding claims, in which a plurality of thermal batteries (26a..n) are provided, and the controller (20) is configured to activate the plurality of thermal batteries (26a..n) sequentially in the emergency operating mode of the energy supply system.

5. Energy supply system according to one of the preceding claims, in which
the energy supply system also has an operating parameter detection device (24) for detecting at least one operating parameter of the consumer unit, and
the controller (20) is configured to switch the energy supply system into the emergency operating mode and to activate the at least one thermal battery (26a..n) only when the operating parameter which is detected by the operating parameter detection device (24) exceeds or undershoots a predetermined limiting value.

6. Energy supply system according to one of the preceding claims, in which the at least one thermal battery (26a..n) is mounted in a replaceable fashion in or on the consumer unit.

7. Energy supply system according to one of the preceding claims, in which
also at least one non-safety-relevant electronic consumer (16a..y) can be connected or is connected to the energy supply network (12), wherein a switch (17a..y) is provided in series with the non-safety-relevant electronic consumer (16a..y), and
the controller is configured to open the switch (17a..y) of the non-safety-relevant electronic consumer (16a..y) in the emergency operating mode of the energy supply system.

8. Method for supplying energy to a consumer unit with at least one-safety relevant electronic consumer (14a..x) which is connected to an energy supply network (12), in which
in the normal operating mode of the energy supply system electrical energy is fed into the energy supply network (12) by a main energy supply source (10);
the electrical energy which is fed into the energy supply network (12) by the main energy supply source (10) is monitored;
switching into an emergency operating mode of the energy supply system takes place if the energy which is fed into the energy supply network (12) by the main energy supply source (10) undershoots a predetermined limiting value; and
in the emergency operating mode of the energy supply system at least one thermal battery (26a..n) is activated in order to feed electrical energy into the energy supply network (12),
**characterized in that**
in the emergency operating mode of the energy supply system an energy which is fed into the energy supply network (12) by the at least one thermal battery (26a..n) is monitored; and
in the emergency operating mode of the energy supply system at least one capacitor (28), which is connected in parallel with the at least one thermal battery (26a..n), is charged by the at least one thermal battery (26a..n) if the energy which is fed into the energy supply network (12) by the at least one thermal battery (26a..n) undershoots a predetermined limiting value by virtue of a switch (15a..x) which is provided in series with the at least one safety-relevant electronic consumer (14a..x) being opened.

9. Method according to Claim 8, in which the at least one thermal battery (26a..n) is preheated by a heat source of the consumer unit in the normal operating mode of the energy supply system.

10. Method according to Claim 8 or 9, in which the at least one thermal battery (26a..n) is activated by a plurality of igniters (40a..n).

11. Method according to one of Claims 8 to 10, in which a plurality of thermal batteries (26a..n) are provided, and the plurality of thermal batteries (26a..n) are activated sequentially in the emergency operating mode of the energy supply system.

12. Method according to one of Claims 8 to 11, in which in an activation period of the thermal battery (26a..n) electrical energy is fed from at least one capacitor (28) into the energy supply network (12), said capacitor (28) being connected in parallel with the at least one thermal battery (26a..n) and being charged by the main energy supply source (10) in the normal operating mode of the energy supply system.

13. Method according to one of Claims 8 to 12, in which also at least one operating parameter of the consumer unit is monitored, and the energy supply system is switched into the emergency operating mode and the at least one thermal battery (26a..n) is activated only when the operating parameter exceeds or undershoots a predetermined limiting value.

14. Method according to one of Claims 8 to 13, in which also at least one non-safety-relevant electronic consumer (16a..y) is connected to the energy supply network (12), and this at least one non-safety-relevant electronic consumer (16a..y) is disconnected from the energy supply network (12) in the emergency operating mode of the energy supply system.

## Revendications

1. Système d'alimentation en énergie destiné à une unité de consommation comprenant un ou plusieurs consommateurs électroniques de sécurité (14a..x), ledit système comportant :
un réseau d'alimentation en énergie (12) auquel au moins un consommateur électronique de sécurité (14a..x) est raccordé ou peut être raccordé ;
une source d'alimentation en énergie principale (10) destinée à injecter de l'énergie électrique dans le réseau d'alimentation en énergie (12) pendant le fonctionnement normal du système d'alimentation en énergie ;
un premier dispositif de détection d'énergie (18) destiné à détecter l'énergie électrique injectée par la source d'alimentation en énergie principale (10) dans le réseau d'alimentation en énergie (12) ;
au moins une batterie thermique (26a..n) destinée à injecter de l'énergie électrique dans le réseau d'alimentation en énergie (12) pendant le fonctionnement d'urgence du système d'alimentation en énergie lorsque l'énergie électrique pouvant être injectée dans le réseau d'alimentation en énergie (12) par la source d'alimentation en énergie principale (10) est insuffisante, au moins un condensateur (28) étant monté en parallèle avec l'au moins une batterie thermique (26a..n) ;
une commande (20) destinée à commuter le système d'alimentation en énergie pendant le fonctionnement d'urgence et à activer l'au moins une batterie thermique (26a..n) lorsque l'énergie détectée par le premier dispositif de détection d'énergie (18) passe au-dessous d'une valeur limite prédéterminée ; et
un interrupteur (15a..x) en série avec l'au moins un consommateur électronique de sécurité (14a..x),
**caractérisé en ce que**
en outre un deuxième dispositif de détection d'énergie (30) est prévu pour détecter l'énergie électrique injectée par l'au moins une batterie thermique (26a..n) dans le réseau d'alimentation en énergie (12) ; et
la commande est en outre conçue pour ouvrir l'interrupteur (15a..x) du consommateur électronique de sécurité (14a..x) en fonctionnement d'urgence du système d'alimentation en énergie afin de charger l'au moins un condensateur (28) lorsque l'énergie détectée par le deuxième dispositif de détection d'énergie (30) passe au-dessous d'une valeur limite prédéterminée.

2. Système d'alimentation en énergie selon la revendication 1, dans lequel l'au moins une batterie thermique (26a..n) est couplée à un échangeur de chaleur (42a..n) qui est relié à une source de chaleur de l'unité de consommation.

3. Système d'alimentation en énergie selon la revendication 1 ou 2, dans lequel l'au moins une batterie thermique (26a..n) comporte une pluralité d'allumeurs (40a..n) qui sont actionnés par la commande (20) pour activer la batterie thermique (26a..n ).

4. Système d'alimentation en énergie selon l'une des revendications précédentes, dans lequel une pluralité de batteries thermiques (26a..n) sont prévues et la commande (20) est conçue pour activer séquentiellement la pluralité de batteries thermiques (26a..n) pendant le fonctionnement d'urgence du système d'alimentation en énergie.

5. Système d'alimentation en énergie selon l'une des revendications précédentes, dans lequel
le système d'alimentation en énergie comporte en outre un dispositif de détection de paramètres de fonctionnement (24) destiné à détecter au moins un paramètre de fonctionnement de l'unité de consommation, et
la commande (20) est conçue pour commuter le système d'alimentation en énergie en fonctionnement d'urgence et activer l'au moins une batterie thermique (26a..n) seulement si le paramètre de fonctionnement détecté par le dispositif de détection de paramètres de fonctionnement (24) passe au-dessus ou au-dessous d'une valeur limite prédéterminée.

6. Système d'alimentation en énergie selon l'une des revendications précédentes, dans lequel l'au moins une batterie thermique (26a..n) est montée de façon remplaçable dans ou sur l'unité de consommation.

7. Système d'alimentation en énergie selon l'une des revendications précédentes, dans lequel
en outre au moins un consommateur électronique (16a..y) non lié à la sécurité est raccordé ou peut être raccordé au réseau d'alimentation en énergie (12), un interrupteur (17a..y) étant prévu en série avec le consommateur électronique (16a..y) non lié à la sécurité, et
la commande est conçue pour ouvrir l'interrupteur (17a..y) du consommateur électronique (16a.. y) non lié à la sécurité pendant le fonctionnement d'urgence du système d'alimentation en énergie.

8. Procédé d'alimentation en énergie d'une unité de consommation comprenant au moins un consommateur électronique de sécurité (14a..x) qui est raccordé à un réseau d'alimentation en énergie (12), procédé dans lequel
pendant le fonctionnement normal du système d'alimentation en énergie, de l'énergie électrique est injectée par une source d'alimentation en énergie principale (10) dans le réseau d'alimentation en énergie (12) ;
l'énergie électrique injectée par la source d'alimentation en énergie principale (10) dans le réseau d'alimentation en énergie (12) est surveillée ; le système d'alimentation en énergie est commuté en fonctionnement d'urgence si l'énergie injectée par la source d'alimentation en énergie principale (10) dans le réseau d'alimentation en énergie (12) passe au-dessous d'une valeur limite prédéterminée ; et
au moins une batterie thermique (26a..n) est activée pendant le fonctionnement d'urgence du système d'alimentation en énergie afin d'injecter de l'énergie électrique dans le réseau d'alimentation en énergie (12),
**caractérisé en ce que**
l'énergie injectée par au l'au moins une batterie thermique (26a..n) dans le réseau d'alimentation en énergie (12) est surveillée pendant le fonctionnement d'urgence du système d'alimentation en énergie ; et pendant le fonctionnement d'urgence du système d'alimentation en énergie, au moins un condensateur (28), qui est monté en parallèle avec l'au moins une batterie thermique (26a..n), est chargé par l'au moins une batterie thermique (26a..n) si l'énergie injectée par l'au moins une batterie thermique (26a..n) dans le réseau d'alimentation en énergie (12) passe au-dessous d'une valeur limite prédéterminée par ouverture d'un interrupteur (15a..x) prévu en série avec l'au moins une consommateur électronique de sécurité (14a..x).

9. Procédé selon la revendication 8, dans lequel l'au moins une batterie thermique (26a..n) est préchauffée par une source de chaleur de l'unité de consommation pendant le fonctionnement normal du système d'alimentation en énergie.

10. Procédé selon la revendication 8 ou 9, dans lequel l'au moins une batterie thermique (26a..n) est activée par une pluralité d'allumeurs (40a..n).

11. Procédé selon l'une des revendications 8 à 10, dans lequel une pluralité de batteries thermiques (26a..n) sont prévues et la pluralité de batteries thermiques (26a..n) sont activées séquentiellement pendant le fonctionnement d'urgence du système d'alimentation en énergie.

12. Procédé selon l'une des revendications 8 à 11, dans lequel de l'énergie électrique, provenant d'au moins un condensateur (28) qui est monté en parallèle avec l'au moins une batterie (26a..n) et qui est chargée par la source d'alimentation en énergie principale (10) pendant le fonctionnement normal du système d'alimentation en énergie, est injectée dans le réseau d'alimentation en énergie (12) dans une période d'activation de la batterie thermique (26a..n).

13. Procédé selon l'une des revendications 8 à 12, dans lequel en outre au moins un paramètre de fonctionnement de l'unité de consommation est surveillé et le système d'alimentation en énergie est commuté en fonctionnement d'urgence et l'au moins une batterie thermique (26a..n) est activée seulement si le paramètre de fonctionnement passe au-dessus ou au-dessous d'une valeur limite prédéterminée.

14. Procédé selon l'une des revendications 8 à 13, dans lequel en outre au moins un consommateur électronique (16a..y) non lié à la sécurité est raccordé au réseau d'alimentation en énergie (12) et cet au moins un consommateur électronique (16a..y) non lié à la sécurité est déconnecté du réseau d'alimentation électrique (12) pendant le fonctionnement d'urgence du système d'alimentation électrique.
